# EUROPÄISCHE PATENTSCHRIFT

(11) **EP 3 775 712 B1**
(45) Veröffentlichungstag und Bekanntmachung des Hinweises auf die Patenterteilung: **02.03.2022**
(21) Anmeldenummer: 19719431.9
(22) Anmeldetag: 29.03.2019
(51) Int. Cl.: F24S 25/50, F24S 25/60, F24S 25/10, F24S 25/00

(54) **QUERVERBINDER ZUM VERBINDEN MEHRERER TRAGSEILE, TRAGSTRUKTUR MIT SOLCH EINEN QUERVERBINDER UND SOLARANLAGE MIT DIESER TRAGSTRUKTUR**
SOLAR ASSEMBLY, SUPPORT STRUCTURE FOR THIS SOLAR ASSEMBLY AND CROSS-CONNECTION FOR THIS SUPPORT STRUCTURE
INSTALLATION SOLAIRE, STRUCTURE PORTEUSE POUR LADITE INSTALLATION SOLAIRE ET CONNECTEUR TRANSVERSAL POUR LADITE STRUCTURE PORTEUSE

(30) Priorität: 30.03.2018 EP 18165346
(43) Veröffentlichungstag der Anmeldung: 17.02.2021
(73) Patentinhaber: voestalpine Krems GmbH, 3500 Krems an der Donau (AT)
(72) Erfinder: SEYR, Alfred, 3125 Statzendorf (AT); MAYER, Florian, 3511 Brunnkirchen (AT); PERNERSTORFER, Reinhard, 3562 Schönberg am Kamp (AT)
(74) Vertreter: Jell, Friedrich
(86) Internationale Anmeldenummer: PCT/EP2019/058116
(87) Internationale Veröffentlichungsnummer: WO 2019/185937

(56) Entgegenhaltungen:
- WO-A1-2012/029192
- WO-A1-2014/129800
- WO-A1-2015/169396
- DE-U1-202009 007 490
- US-A1- 2012 031 488
- US-A1- 2016 329 858

## Beschreibung

Die Erfindung betrifft eine Solaranlage, eine Tragstruktur für diese Solaranlage und einen Querverbinder für diese Tragstruktur zum Verbinden mehrerer Tragseile, mit einem Längsträger, der mindestens ein Halteelement für mindestens ein Anbauteil, beispielsweise PV-Modul, und mindestens ein Befestigungselement für ein jeweiliges Tragseil aufweist.

Aus der WO2006/130892A1 ist bekannt, PV Module an einen Querverbinder zu befestigen, welche an zwei Tragseilen lasten. Hierzu weist der Querverbinder einen Längsträger auf, an dem ein Befestigungselement für mindestens ein Tragseil und für das PV-Modul ein Halteelement vorgesehen sind. Die Einstellung der Elevation von PV Modulen kann durch gegenläufiges Ziehen zweier an einem Befestigungselement angreifender Tragseile eingestellt werden. Dies führt jedoch zu einer Verspannung des Tragwerks - was zu einem erhöhten Konstruktionsaufwand für die Sicherstellung der Standfestigkeit führt. Zudem bedarf es für hierfür eines zusätzlichen Tragseils, was sich ebenfalls nachteilig auf die Kosten auswirkt.

Unter Vermeidung eines zusätzlichen Tragseils zur Elevation der PV Module schlägt die EP2476140B1 vor, zwischen dem Querverbinder und den Tragseilen je eine Drehlagerung vorzusehen. Für die Einstellung der Elevation eines PV Moduls bedarf es der Einstellung mehrere Drehlagerungen - was den Handhabungsaufwand erhöht. Zudem wird durch die Vielzahl an Schwenkhalterungen die von den Tragseilen aufzunehmende Traglast erhöht - was auch bei diesem Stand der Technik zu einem erhöhten Konstruktionsaufwand führt, um die Standfestigkeit sicherzustellen.

Dokument US 2012/031488 A1 beschreibt einen Querverbinder zum Verbinden mehrerer Tragseile, mit einem Längsträger, der mindestens ein Halteelement für mindestens ein Anbauteil und mindestens ein Befestigungselement für ein jeweiliges Tragseil aufweist.

Die Erfindung hat sich daher die Aufgabe gestellt, ausgehend vom eingangs geschilderten Stand der Technik, einen Querverbinder zwischen Tragseilen derart konstruktiv zu verändern, dass dieser die Flexibilität eines montierten Anbauteils - bei einem Minimum an Traglasterhöhung - erhöhen kann.

Die Erfindung löst die gestellte Aufgabe durch die Merkmale des Anspruchs 1.

Weist der Längsträger zwei, im Querschnitt schalenförmig ausgebildete Längsprofile aus einem Flachmaterial auf, welche Längsprofile Drehelemente eines Drehlagers am Querverbinder zur Verdrehung gegeneinander um eine Achse parallel zur Längserstreckung des Langträgers ausbilden, wobei deren Verdrehlage feststellbar ist und wobei am ersten Längsprofil die Befestigungselemente und am zweiten Längsprofil das Halteelement vorgesehen sind, kann ein an die Erfordernisse variabel und einfach anpassbarer Querverbinder geschaffen werden, um das Anbauteil in eine gewünschte Montagelage zu bringen. Der erfindungsgemäße Querverbinder kann nämlich im Gegensatz zum Stand der Technik gerade jene Bewegungsachse zur Verfügung stellen, die zur Einstellung der Elevation des Anbauteils notwendig ist - dies auch unter Berücksichtigung eines eventuellen Durchhangs am Tragseil. Außerdem bedarf es für den erfindungsgemäßen Querverbinder durch die schalenförmige Ausführung lediglich eines geringfügig erhöhten Materialaufwands - was zu vernachlässigbarer Gewichtserhöhung im Vergleich mit Hohlprofilen als Querverbinder anderer Ausführungen führt. Eine erhöhte Traglast der Tragseile durch den erfindungsgemäßen Querverbinder muss daher kaum berücksichtigt werden. Zudem kann durch das erfindungsgemäß mögliche Verdrehen der Drehelemente gegeneinander - u. a. wegen der schalenförmig ausgebildeten Längsprofile - konstruktive Einfachheit erreicht werden, was wiederum auch zu einem kostengünstigen Querverbinder führen kann. Zusätzliche konstruktive Vereinfachung kann dadurch erreicht werden, wenn das Flachmaterial ein Blech ist.

Der erfindungsgemäße Querverbinder kann daher nicht nur die Flexibilität der Anbauteile erhöhen, sondern auch vergleichsweise leicht und konstruktiv einfach ausgebildet sein.

Im Allgemeinen kann das Anbauteil, beispielsweise ein PV-Modul, sein. Aber auch andere Anbauteile, wie beispielsweise Solarkollektor, Flachkollektoren, Spiegel etc. sind denkbar. Vorzugsweise kann das Anbauteil flächig ausgebildet sein.

Wenn das zweite Längsprofil das erste Längsprofil umgreift, können die Längsprofile unter anderem als Führungsfläche dienen und sich zudem gegenseitig gegenüber einem Abziehen senkrecht zur Längsachse des Längsträgers sichern. Des Weiteren ist es möglich dadurch die Handhabung des Querverbinders bei der Einstellung der Elevation des Anbauteils weiter zu erleichtern.

Die Lagestabilität des Querverbinders an den Tragseilen ist verbesserbar, wenn das erste Längsprofil einen flachen Profilboden aufweist, an dem die Befestigungselemente vorgesehen sind. Durch den flachen Profilboden erhöht sich nämlich die Anlagefläche des Querverbinders am Tragseil - was durch ein breiteres Aufsitzen am Tragseil die Kippneigung des Querverbinders reduziert. Zudem kann der flache Profilboden zur Führung des Tragseils bis zum jeweiligen Befestigungselement dienen und auf diese Weise die Handhabung des Querverbinders bei seiner Montage erleichtern.

Weist der flache Profilboden mindestens eine quer zur Längserstreckung des Langträgers verlaufende Sicke, für das Tragseil auf, kann die Lage des Seils am Querverbinders gesichert werden, was die Standfestigkeit und Handhabbarkeit des Querverbinders weiter verbessern kann. Hierzu kann sich insbesondere einen Halbrundsicke auszeichnen. Vorzugsweise ist die Sicke offen.

Am Querverbinder können die Befestigungselemente auf konstruktiv einfache Weise ermöglicht werden, wenn das erste Längsprofil Laschen, welche durch Einschneiden und Formbiegen aus dem ersten Längsprofil ausgebildet sind, als Befestigungselemente für das jeweilige Tragseil aufweist. Zudem sind derartige Befestigungselemente vergleichsweise einfach vorsehbar.

Weisen die Laschen an ihren vorderen Enden je mindestens eine Öffnung zum Eingriff eines sich am ersten Längsprofil abstützbaren Spannelements auf, kann dies die Handhabung des Querverbinders bei der Befestigung an den Tragseilen erleichtern.

Die Laschen sind je durch einen Steg und einen Flansch T-förmig ausgebildet, was die Handhabung des Befestigungselements erleichtern kann.

Der Flansch weist mindestens zwei Öffnungen auf, was eine standfeste Klemmung des jeweiligen Tragseils sicherstellen kann.

Die mechanische Belastbarkeit der Laschen kann erhöht werden, wenn die Laschen je mindestens eine Längssicke aufweisen. Die Standfestigkeit des Querverbinders kann sich dadurch weiter erhöhen. Vorzugsweise ist die Längssicke offen.

Die Montage des Anbauteils am Querverbinder kann erleichtert werden, wenn das zweite Längsprofil ein flaches Profildach aufweist, an dem das Halteelement vorgesehen ist.

Weist der Querverbinder eine Arretiereinrichtung auf, die jeweils mindestens eine Lochreihe am ersten und am zweiten Längsprofil und wenigstes ein, in jeweils ein Loch der beiden Lochreihen eingreifendes Rastelement aufweist, kann ohne erheblichen konstruktive Aufwand am Querverbinder die Möglichkeit geschaffen werden, die Verdrehlage festzustellen. Dies kann die Handhabung des Querverbinders bei der gewünschten Einstellung der Elevation des Anbauteils erleichtern.

Besonders kann sich der erfindungsgemäße Querverbinder bei einer Tragstruktur mit mehreren Tragseilen eignen.

Bevorzugt kann diese Tragstruktur PV-Module, beispielsweise als Anbauteile, von Solaranlagen tragen.

In den Figuren ist beispielsweise der Erfindungsgegenstand anhand einer Ausführungsvariante dargestellt. Es zeigen
Fig. 1 eine Frontansicht auf eine Tragstruktur,
Fig. 2 eine Seitenansicht der nach Fig. 1 dargestellten Tragstruktur und
Fig. 3 eine abgerissene Unteransicht auf die Tragstruktur nach Fig. 1 und 2.

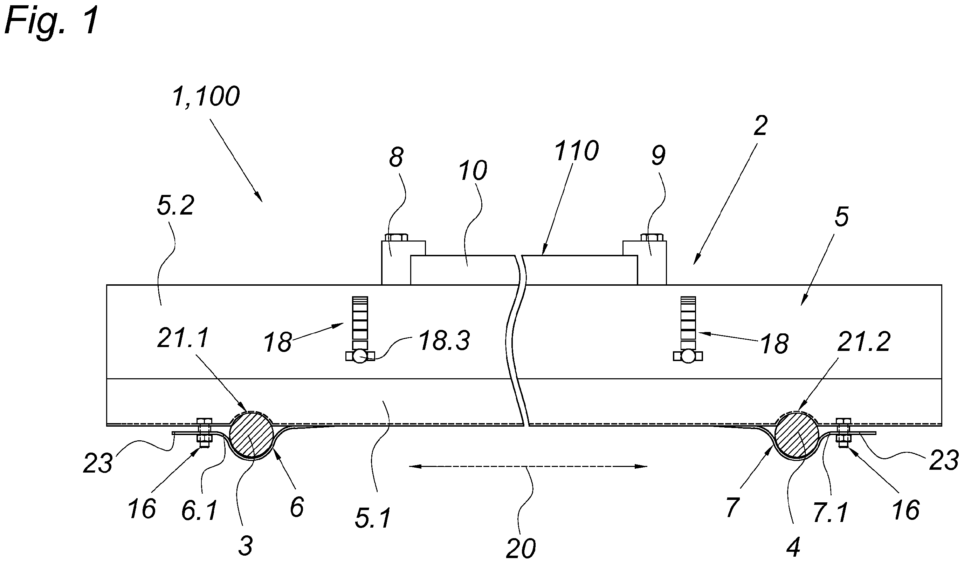

Nach den Figuren 1, 2 und 3 wird eine Tragstruktur 1 von einer nicht näher dargestellten Solaranlage 100 dargestellt. Die Tragstruktur 1 weist einen vorzugsweise biegesteifen Querverbinder 2 und zwei Tragseile 3, 4 auf, zwischen denen der Querverbinder 2 vorgesehen ist und der diese beiden Tragseile 3, 4 miteinander verbindet. Der Querverbinder 2 weist hierzu einen biegesteifen Längsträger 5 auf, der mit mehreren Befestigungselementen 6, 7 je ein Tragseil 3 bzw. 4 lösbar befestigt. Der Querverbinder 2 weist zudem mehrere Haltelemente 8, 9 auf, die ein Anbauteil 10, nämlich ein PV-Modul 110, am Querverbinder 2 lösbar festhalten. Ein anderes Anbauteil 10 ist vorstellbar, was nicht näher dargestellt worden ist.

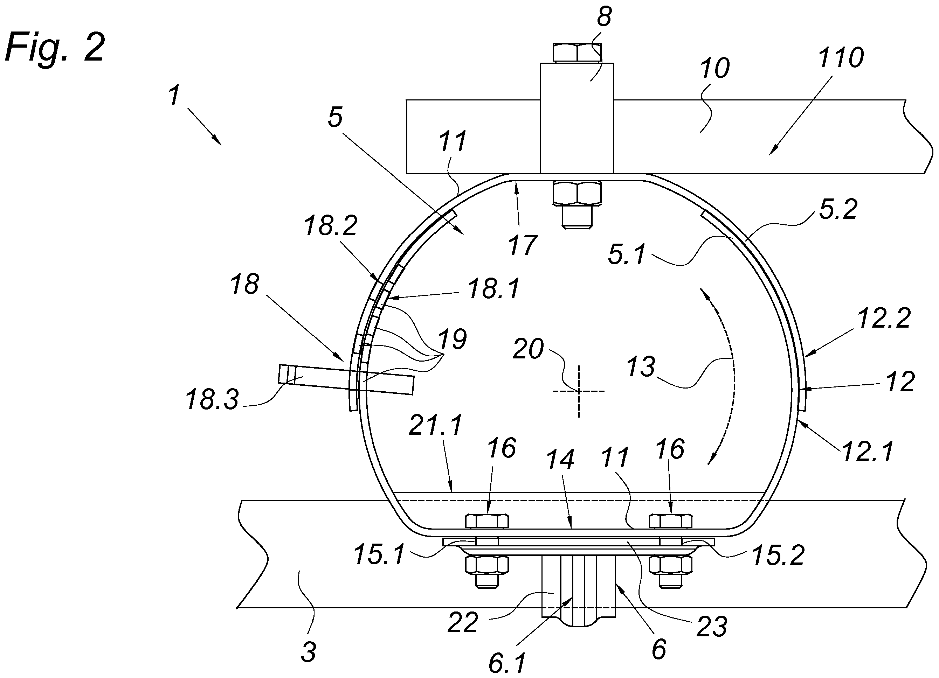

Erfindungsgemäß weist der Längsträger 5 zwei Längsprofile 5.1, 5.2 auf, die im Querschnitt schalenförmig ausgebildet sind - siehe hierzu Fig. 2. Diese Schalen werden aus einem Flachmaterial 11, nämlich einem Blech, durch beispielsweise ein Rollprofilierverfahren geformt. Der Querverbinder 2 ist damit vergleichsweise materialarm herstellbar und in weiterer Folge auch leicht ausgebildet, was wiederum die Tragseilen 3, 4 entlastet.

Die beiden Längsprofile 5.1, 5.2 stellen -wie in Fig. 2 weiter erkennbar- relativ zueinander drehbare Drehelemente 12.1, 12.2 eines Drehlagers 12 am Querverbinder 2 dar. Damit kann das Anbauteil 10 mithilfe des Querverbinders 2 gegenüber den Tragseilen 3, 4 in seiner Lage verstellt werden, da die Befestigungselementen 6, 7, welche am unteren ersten Längsprofil 5.1 vorgesehen sind, und die Halteelemente 8, 9, welche am oberen zweiten Längsprofil 5.2 vorgesehen sind, relativ gegeneinander verdrehbar sind - und zwar um eine Achse parallel zur Längserstreckung 20 des Langträgers. Der Querverbinder kann so am Anbauteil 10 die Einstellung einer gewünschten Elevation ermöglichen. Der erfindungsgemäße Querverbinder 2 weist somit bei einer minimalen Traglasterhöhung höchste Flexibilität in der Positionierung des Anbauteils 10 auf.

Wie zudem der Fig. 2 entnommen werden kann, umgreift der das zweite Längsprofil 5.2 das erste Längsprofil 5.1 und ist sohin am ersten Längsprofil 5.1 geführt. Konstruktive Einfachheit ist damit erreicht.

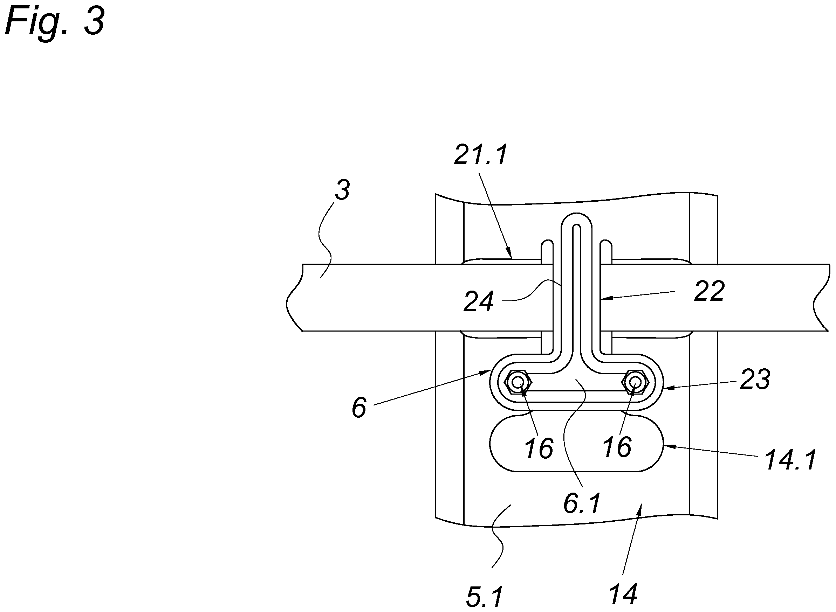

Zudem sind beide Längsprofile 5.1, 5.2 abgeflacht, was die Handhabbarkeit des Querverbinder 2 bei der Montage erleichtert. So weist das untere, erste Längsprofil 5.1 einen flachen Profilboden 14 auf, an welchem die Befestigungselemente 6, 7 vorgesehen sind. Diese umfassen Laschen 6.1, 7.1, welche durch Einschneiden und Formbiegen aus dem ersten Längsprofil 5.1 gebildet werden, was zu den nach Fig. 3 dargestellten Aussparungen 14.1 im Profilboden 14 führt. Auf diese Weise ist der Konstruktionsaufwand am Querverbinder 2 deutlich reduziert - auch wird derart eine Gewichtserhöhung durch zusätzliche Teile vermieden.

Diese Laschen 6.1, 7.1 weisen an ihrem vorderen Ende jeweils zwei Öffnungen 15.1, 15.2 auf, durch welche sich am ersten Längsprofil 5.1 abstützendes Spannelemente 16, nämlich eine Spannschraube, greift und damit den Querverbinder 2 am jeweilige Tragseil 3, 4 lösbar verbindet, nämlich durch Verschraubung.

Das obere, zweite Längsprofil 5.2 weist ein flaches Profildach 17 auf, an welchem die Halteelement 8, 9 vorgesehen, die ein Anbauteil 10, nämlich ein PV-Modul 110, lösbar mit dem Querverbinder 2 verbinden.

Zur Feststellung der Verdrehlage 13 des zweiten Längsprofils 5.2 gegenüber dem ersten Längsprofil 5.1 weist der Querverbinder 2 eine Arretiereinrichtung 18 auf. Diese Arretiereinrichtung 18 bildet sich aus übereinanderliegen Lochreihen 18.1, 18.2 am ersten und am zweiten Längsprofil 5.1, 5.2 und aus einem Rastelement 18.3 in Form eines Stifts, der in je ein Loch 19 der beiden Lochreihen 18.1, 18.2 zur Feststellung der Verdrehlage 13 eingreift.

Wie zudem den Figuren 1 bis 3 zu entnehmen weist der flache Profilboden 14 zwei offene Sicken 21.1, 21.2 auf, in denen das jeweilige Tragseil 3, 4 verläuft und damit die Lage der Tragseile 3, 4 am Querverbinder 2 sicherstellt. Außerdem erhöhen diese Sicken 21.1, 21.2 die mechanischen Kennwerte des Querverbinders 2. Die Sicken 21.1, 21.2 verlaufen quer zur Längserstreckung 20 des Langträgers 5. Außerdem sind diese Sicken 21.1, 21.2 je als Halbrundsicke ausgebildet, was der Fig. 1 entnommen werden kann.

Nach Fig. 3 ist das Befestigungselement 6 -stellvertretend auch für das andere Befestigungselement 7- näher dargestellt. An der Lasche 6.1 des Befestigungselements kann der Steg 22 und der Flansch 23 erkannt werden, durch die die Lasche 6.1 eine T-förmige Gestalt erhält bzw. ist damit die Lasche 6.1 T-förmig ausgebildet. Am Flansch 23 sind die beiden Öffnungen 15.1, 15.2 für je ein Spannelement 16 vorgesehen bzw. eingebracht.

Die Laschen 6.1, 7.1 weisen zudem an deren Stegen 22 je eine offene Längssicke 24 auf, was die mechanische Belastbarkeit der Laschen 6.1, 7.1 und damit die Standfestigkeit des Querverbinders 2 erhöht.

## Patentansprüche

1. Querverbinder zum Verbinden mehrerer Tragseile (3, 4), mit einem Längsträger (5), der mindestens ein Halteelement (8, 9) für mindestens ein Anbauteil (10) und mindestens ein Befestigungselement (6, 7) für ein jeweiliges Tragseil (3, 4) aufweist, **dadurch gekennzeichnet, dass** der Längsträger (5) zwei, im Querschnitt schalenförmig ausgebildete Längsprofile (5.1, 5.2) aus einem Flachmaterial (11), insbesondere Blech, aufweist, welche Längsprofile (5.1, 5.2) Drehelemente (12.1, 12.2) eines Drehlagers (12) am Querverbinder (2) zur Verdrehung gegeneinander um eine Achse parallel zur Längserstreckung (20) des Langträgers (5) ausbilden, wobei deren Verdrehlage (13) feststellbar ist und wobei am ersten Längsprofil (5.1) die Befestigungselemente (6, 7) und am zweiten Längsprofil (5.2) das Halteelement (8, 9) vorgesehen sind.

2. Querverbinder nach Anspruch 1, **dadurch gekennzeichnet, dass** das zweite Längsprofil (5.2) das erste Längsprofil (5.1) umgreift.

3. Querverbinder nach Anspruch 1 oder 2, **dadurch gekennzeichnet, dass** das erste Längsprofil (5.1) einen flachen Profilboden (14) aufweist, an dem die Befestigungselemente (6, 7) vorgesehen sind.

4. Querverbinder nach Anspruch 3, **dadurch gekennzeichnet, dass** der flache Profilboden (14) mindestens eine quer zur Längserstreckung (20) des Langträgers (5) verlaufende Sicke (21.1, 21.2), insbesondere Halbrundsicke, für das Tragseil (3, 4) aufweist.

5. Querverbinder nach einem der Ansprüche 1 bis 4, **dadurch gekennzeichnet, dass** das erste Längsprofil (5.1) Laschen (6.1, 7.1), welche durch Einschneiden und Formbiegen aus dem ersten Längsprofil (5.1) ausgebildet sind, als Befestigungselemente (6, 7) für das jeweilige Tragseil (3, 4) aufweist.

6. Querverbinder nach Anspruch 5, **dadurch gekennzeichnet, dass** die Laschen (6.1, 7.1) an ihren vorderen Enden je mindestens eine Öffnung (15.1, 15.2) zum Eingriff eines sich am ersten Längsprofil (5.1) abstützbaren Spannelements (16) aufweist.

7. Querverbinder nach Anspruch 5 oder 6, **dadurch gekennzeichnet, dass** die Laschen (6.1, 7.1) je durch einen Steg (22) und einen Flansch (23) T-förmig ausgebildet sind.

8. Querverbinder nach Anspruch 7, **dadurch gekennzeichnet, dass** der Flansch (23) mindestens zwei Öffnungen (15.1, 15.2) aufweist.

9. Querverbinder nach einem der Ansprüche 5 bis 8, **dadurch gekennzeichnet, dass** die Laschen (6.1, 7.1) je mindestens eine Längssicke (24) aufweisen.

10. Querverbinder nach einem der Ansprüche 1 bis 9, **dadurch gekennzeichnet, dass** das zweite Längsprofil (5.2) ein flaches Profildach (17) aufweist, an dem das Halteelement (8, 9) vorgesehen ist.

11. Querverbinder nach einem der Ansprüche 1 bis 10, **dadurch gekennzeichnet, dass** der Querverbinder (2) eine Arretiereinrichtung (18) aufweist, die jeweils mindestens eine Lochreihe (18.1, 18.2) am ersten und am zweiten Längsprofil (5.1, 5.2) und wenigstes ein, in jeweils ein Loch (19) der beiden Lochreihen (18.1, 18.2) zur Feststellung der Verdrehlage (13) eingreifendes Rastelement (18.3) aufweist.

12. Tragstruktur mit mehreren Tragseilen (3, 4) und mit einem an, vorzugsweise zwei, Tragseilen (3, 4) befestigen Querverbinder (2) nach einem der Ansprüche 1 bis 11.

13. Solaranlage mit mehreren PV-Modulen und mit einer, diese PV-Module (110) tragenden Tragstruktur (1) nach Anspruch 12.

## Claims

1. Cross-connector for connecting a plurality of support cables (3, 4), having a longitudinal member (5) which comprises at least one retaining element (8, 9) for at least one attachment part (10) and at least one fastening element (6, 7) for a respective support cable (3, 4), **characterized in that** the longitudinal member (5) has two longitudinal profiles (5.1, 5.2) which have a bowl-shaped cross-section and are made of a flat material (11), more particularly sheet metal, which longitudinal profiles (5.1, 5.2) form rotation elements (12.1, 12.2) of a pivot bearing (12) on the cross-connector (2) for rotation relative to one another about an axis parallel to the longitudinal extent (20) of the longitudinal member (5), wherein the rotational position (13) thereof can be fixed and wherein the fastening elements (6, 7) are provided on the first longitudinal profile (5.1) and the retaining element (8, 9) is provided on the second longitudinal profile (5.2).

2. Cross-connector according to claim 1, **characterized in that** the second longitudinal profile (5.2) embraces the first longitudinal profile (5.1).

3. Cross-connector according to claim 1 or 2, **characterized in that** the first longitudinal profile (5.1) has a flat profile base (14) on which the fastening elements (6, 7) are provided.

4. Cross-connector according to claim 3, **characterized in that** the flat profile base (14) has at least one bead (21.1, 21.2), more particularly a semicircular bead, for the support cable (3, 4), which bead (21.1, 21.2) extends transversely to the longitudinal extent (20) of the longitudinal member (5).

5. Cross-connector according to one of the claims 1 to 4, **characterized in that** the first longitudinal profile (5.1) has lugs (6.1, 7.1), which are formed from the first longitudinal profile (5.1) by cutting and shaping, as fastening elements (6, 7) for the respective support cable (3, 4).

6. Cross-connector according to claim 5, **characterized in that** the lugs (6.1, 7.1) each have at their front ends at least one opening (15.1, 15.2) for engagement of a tensioning element (16) which can be supported on the first longitudinal profile (5.1).

7. Cross-connector according to claim 5 or 6, **characterized in that** the lugs (6.1, 7.1) are each T-shaped by a web (22) and a flange (23).

8. Cross-connector according to claim 7, **characterized in that** the flange (23) has at least two openings (15.1, 15.2).

9. Cross-connector according to one of the claims 5 to 8, **characterized in that** the lugs (6.1, 7.1) each have at least one longitudinal bead (24).

10. Cross-connector according to one of claims 1 to 9, **characterized in that** the second longitudinal profile (5.2) has a flat profile roof (17) on which the retaining element (8, 9) is provided.

11. Cross-connector according to one of claims 1 to 10, **characterized in that** the cross-connector (2) has a locking device (18) which has in each case at least one row of holes (18.1, 18.2) on the first and on the second longitudinal profile (5.1, 5.2) and at least one latching element (18.3) engaging in in each case one hole (19) of the two rows of holes (18.1, 18.2) in order to fix the rotational position (13).

12. Support structure having several support cables (3, 4) and having a cross-connector (2) attached to, preferably two, support cables (3, 4) according to one of claims 1 to 11.

13. Solar power system having several PV modules and having a support structure (1) supporting said PV modules (110) according to claim 12.

## Revendications

1. Connecteur transversal servant à relier plusieurs câbles porteurs (3, 4), comportant un longeron (5) qui présente au moins un élément de retenue (8, 9) pour au moins une pièce rapportée (10) et au moins un élément de fixation (6, 7) pour un câble porteur respectif (3, 4), **caractérisé en ce que** le longeron (5) présente deux profilés longitudinaux (5.1, 5.2) réalisés en un matériau plat (11), en particulier en tôle, en forme de coupelle en section transversale, lesquels profilés longitudinaux (5. 1, 5.2) forment des éléments rotatifs (12.1, 12.2) d'un palier rotatif (12) sur le connecteur transversal (2) pour pouvoir tourner l'un par rapport à l'autre autour d'un axe parallèle à l'extension longitudinale (20) du longeron (5), leur position de rotation (13) pouvant être fixée et les éléments de fixation (6, 7) étant prévus sur le premier profilé longitudinal (5.1) et l'élément de retenue (8, 9) sur le deuxième profilé longitudinal (5.2).

2. Connecteur transversal selon la revendication 1, **caractérisé en ce que** le deuxième profilé longitudinal (5.2) vient en prise autour du premier profilé longitudinal (5.1).

3. Connecteur transversal selon la revendication 1 ou 2, **caractérisé en ce que** le premier profilé longitudinal (5.1) présente un fond de profilé plat (14) sur lequel sont prévus les éléments de fixation (6, 7).

4. Connecteur transversal selon la revendication 3, **caractérisé en ce que** le fond de profilé plat (14) présente au moins une nervure (21.1, 21.2), en particulier une nervure semicirculaire, s'étendant transversalement à l'extension longitudinale (20) du longeron (5), pour le câble porteur (3, 4) .

5. Connecteur transversal selon l'une des revendications 1 à 4, **caractérisé en ce que** le premier profilé longitudinal (5.1) présente des pattes (6.1, 7.1), qui sont formées par entaillage et pliage en forme à partir du premier profilé longitudinal (5.1), comme éléments de fixation (6, 7) pour le câble porteur respectif (3, 4).

6. Connecteur transversal selon la revendication 5, **caractérisé en ce que** les pattes (6.1, 7.1) présentent à chacune de leurs extrémités avant au moins une ouverture (15.1, 15.2) pour l'engagement d'un élément de serrage (16) pouvant s'appuyer sur le premier profilé longitudinal (5.1).

7. Connecteur transversal selon la revendication 5 ou 6, **caractérisé en ce que** les pattes (6.1, 7.1) sont réalisées chacune en forme de T par une branche (22) et une bride (23).

8. Connecteur transversal selon la revendication 7, **caractérisé en ce que** la bride (23) présente au moins deux ouvertures (15.1, 15.2) .

9. Connecteur transversal selon l'une des revendications 5 à 8, **caractérisé en ce que** les pattes (6.1, 7.1) présentent chacune au moins une nervure longitudinale (24).

10. Connecteur transversal selon l'une des revendications 1 à 9, **caractérisé en ce que** le deuxième profilé longitudinal (5.2) présente un toit de profilé plat (17) sur lequel est prévu l'élément de retenue (8, 9).

11. Connecteur transversal selon l'une des revendications 1 à 10, **caractérisé en ce que** le connecteur transversal (2) présente un dispositif d'arrêt (18) qui présente respectivement au moins une rangée de trous (18.1, 18.2) sur le premier et le deuxième profilé longitudinal (5.1, 5.2) et au moins un élément d'encliquetage (18.3) s'engageant dans un trou respectif (19) des deux rangées de trous (18.1, 18.2) pour fixer la position de rotation (13).

12. Structure porteuse comportant plusieurs câbles porteurs (3, 4) et un connecteur transversal (2) selon l'une des revendications 1 à 11 fixé à, de préférence, deux câbles porteurs (3, 4).

13. Installation solaire comportant plusieurs modules PV et une structure porteuse (1) selon la revendication 12 portant ces modules PV (110).
